Europäisches Patentamt

European Patent Office

Office européen des brevets

(19)

(11) **EP 0 604 620 B1**

(12) ## EUROPEAN PATENT SPECIFICATION

(45) Date of publication and mention
of the grant of the patent:
**29.12.1999 Bulletin 1999/52**

(21) Application number: **93915081.9**

(22) Date of filing: **24.06.1993**

(51) Int Cl.6: **H04B 7/12**

(86) International application number:
**PCT/SE93/00572**

(87) International publication number:
**WO 94/01939 (20.01.1994 Gazette 1994/03)**

(54) **METHOD FOR RADIOCOMMUNICATION BY MEANS OF FREQUENCY DIVERSITY**

VERFAHREN ZUR FUNKÜBERTRAGUNG DURCH FREQUENZVERSCHIEDENHEIT

PROCEDE DE RADIOCOMMUNICATIONS PAR DIVERSITE DE FREQUENCES

(84) Designated Contracting States:
**DE FR GB NL**

(30) Priority: **09.07.1992 SE 9202124**

(43) Date of publication of application:
**06.07.1994 Bulletin 1994/27**

(73) Proprietor: **TELIA AB**
**123 86 Farsta (SE)**

(72) Inventor: **GUNMAR, Krister**
**S-136 80 Haninge (SE)**

(74) Representative: **Akerman, Marten Lennart et al**
**Albihns Patentbyra Malmö AB**
**P.O.Box 4289**
**203 14 Malmö 4 (SE)**

(56) References cited:
**US-A- 3 361 970**

• **SEVENTH INTERNATIONAL CONFERENCE ON ANTENNAS AND PROPAGATION ICAP 91, (Conf, Publ. No. 333), Vol. 1, 15-18 April 1991, ALLEN G. et al., "Frequency Diversity Propagation Measurements for an Indoor 60GHz Mobile Radio Link", p. 298-301.**
• **IEEE TRANSACTIONS ON COMMUNICATIONS, Volume COM33, No. 1, January 1985, P.D. IRNER et al., "Measured Frequency Diversity Improvement for Digital Radio", pages 106-109.**

**Description**

FIELD OF THE INVENTION

The present invention relates to a method for radio-communication system for transmitting data between mobile units and/or fixed units in connection with monitoring and controlling road traffic. The invention especially relates to data communication from car to car and fixed cell to car. The ranges are short in this application and relate to about 100 m.

PRIOR ART

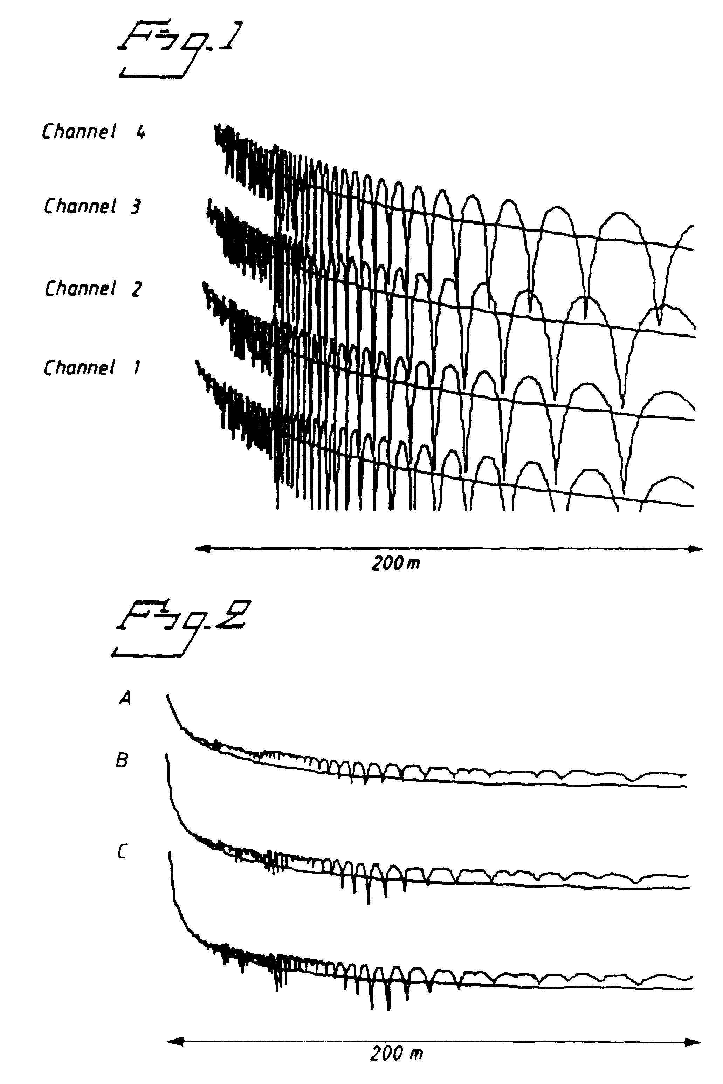

There are certain situations in which is extremely difficult to ensure the quality of data transmission by means of narrow-band techniques. This can be seen by studying curves of power obtained in a receiver as a function of the distance from the transmitter. These so-called propagation curves depend to a great extent on antenna heights, the nature of the surrounding terrain, electrical ground characteristics and others. An especially difficult case arises when there is only one single reflected wave from the roadway and this wave is of approximately the same strength as the direct wave between the transmitter and receiver. Figure 1 shows propagation curves for this 2-beam situation. If a stationary car attempts to communicate with a fixed cell, it can well happen that the car is located at a minimum in the propagation curve, a so-called fading minimum. In the same way, it can occur that two cars which are being driven at nearly the same speed and which attempt to communicate with one another get into minima in the propagation curve and remain there for a relatively long time. If the communication takes place at very high frequencies such as 17 or 60 GHz, which frequencies have been of current interest, there is a suitable bandwidth for being able to use frequency diversity in the transmission and the fading problem can be overcome.

SUMMARY OF THE INVENTION

The present invention specifies a method as claimed in claim 1.

The present invention thus provides a method for radiocommunication between transmitters and receivers, which transmitters and receivers are mobile or fixed. According to the invention, a nominal carrier frequency in the GHz range is used together with at least one diversity frequency, the signals being combined in order to avoid fading minima in the total propagation curve.

Other embodiments of the invention are specified in greater detail in the subsequent patent claims.

BRIEF DESCRIPTION OF THE DRAWINGS

The invention will now be described in detail with reference to the following drawings, in which:

Figure 1 shows a simulated propagation curve for the two-beam model for four different channels in an ideal case;
Figure 2 shows the effect of frequency diversity when the signals are combined for 4, 3 and 2 channels;
Figure 3 is a figure like Figure 1 simulated for a propagation environment corresponding to an airfield;
Figure 4 is a figure like Figure 2 for the situation in Figure 3;
Figure 5 is a figure like Figure 1 with simulation of a propagation environment corresponding to a car tunnel; and
Figure 6 is a figure like Figure 2 for the situation in Figure 5.

DETAILED DESCRIPTION OF A PREFERRED EMBODIMENT

The present invention relates to a radiocommunication system for transmitting data between cars and/or fixed units at the side of the road. It is consequently a matter of small communication distances, for example less than 200 m, and low antenna heights, normally slightly more than 1.5 m. A problem with such low antenna heights is the ground reflection which is almost as strong as the direct wave. To resolve the small time difference which arises, carrier wave frequencies of the order of magnitude of about 10 GHz and higher are required. In principle, a signal with bandwidth B can be formed so that propagation path differences of approximately 1/B are resolved. A wide bandwidth can also be used for being able to transmit large quantities of information.

The characteristics of signals with very great bandwidths can be taken advantage of by frequency diversity. In this case, the signal energy need not take up the entire band but is contained in a relatively low number of concentrations of spectral density which, however, together must have a suitable spectral extent.

In the text which follows, the signal processing for producing frequency diversity in a radiocommunication system is described, where information is transmitted between vehicles with a mutual distance D. The distance D is assumed to be large in relation to the antenna heights of the vehicles, here termed $h_1$ and $h_2$. The propagation path difference $\Delta$ between direct path and reflected path, expressed in number of wavelengths is approximately given by:

$$\Delta = 2h_1 h_2 / (D\lambda)$$

The propagation curve for a 2-beam model with two almost identically strong wave components and frequencies 60 GHz is shown in Figure 1. With antenna heights equal to 1.65 m, $\Delta$ values equal to 5.5, 6.5 and 7.5 are obtained for distances of 200, 167 and, respectively, 145 m. Since the differences in the propagation path constitute half the wavelength, the distances represent minima in the propagation curve.

The method for calculating diversity frequencies is as follows:

Start from the desired range defined in a suitable manner, in our case 200 m, and a nominal carrier wave frequency, in our case 60 GHz, and calculate by means of an ideal 2-beam model where minima are present in the propagation curve, beginning at the range limit and for decreasing D. The frequencies for the diversity channels are obtained by providing for the diversity channels in turn having a maximum in the propagation curve at the different successively smaller distances which provide minima at nominal frequency. This is brought about for three diversity frequencies by means of the following equations:

$$2h_1 h_2/(200\lambda_0) = 2h_1 h_2/(200\lambda_3) - 0.5$$

$$2h_1 h_2/(167\lambda_0) = 2h_1 h_2/(167\lambda_2) - 0.5$$

$$2h_1 h_2/(145\lambda_0) = 2h_1 h_2/(145\lambda_1) - 0.5$$

and the relationships:

$$f_0 = c/\lambda_0$$

$$f_3 = c/\lambda_3$$

$$f_2 = c\lambda_2$$

$$f_1 = c/\lambda_1$$

where

c is the speed of light
$f_0$ = the nominal frequency
$f_3$, $f_2$ and $f_1$ are diversity frequencies.

For specified antenna heights and a nominal frequency of 60 GHz, the following are obtained:

$$f_0 = 60 \text{ GHz}$$

$$f_3 = 65.52 \quad ''$$

$$f_2 = 64.56 \quad ''$$

$$f_1 = 63.96 \quad ''$$

To produce this diversity, a frequency band with a bandwidth of 5.52 GHz is thus required, but since each channel in itself is narrow-band, there is plenty of frequency space left over.

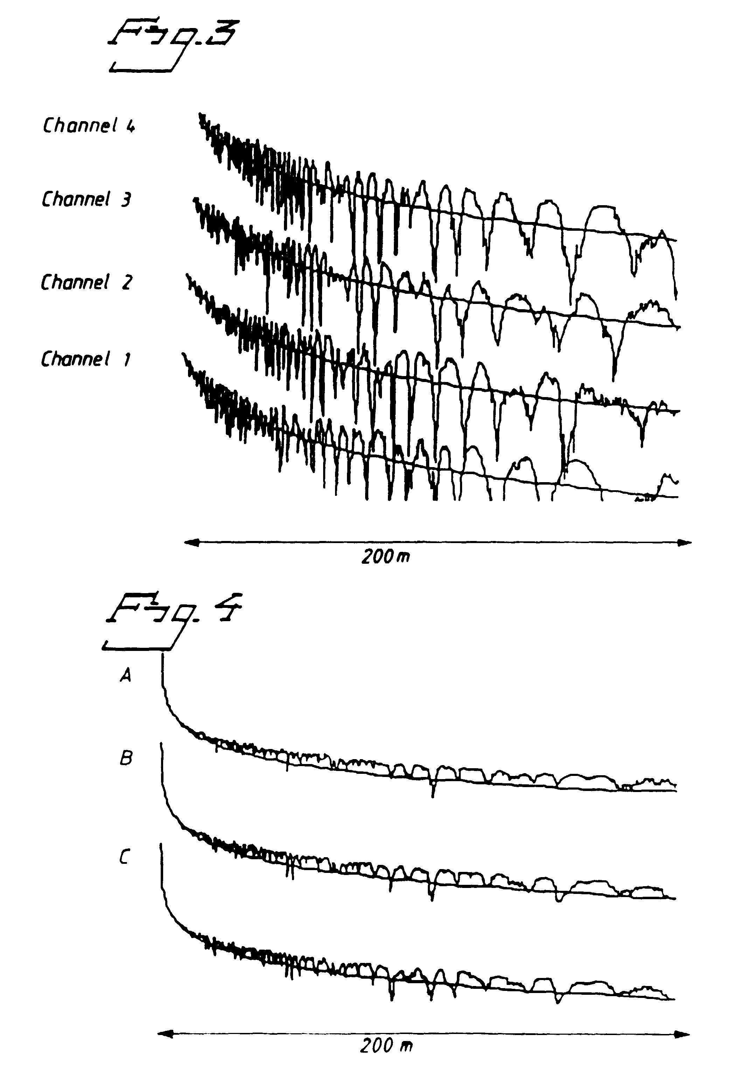

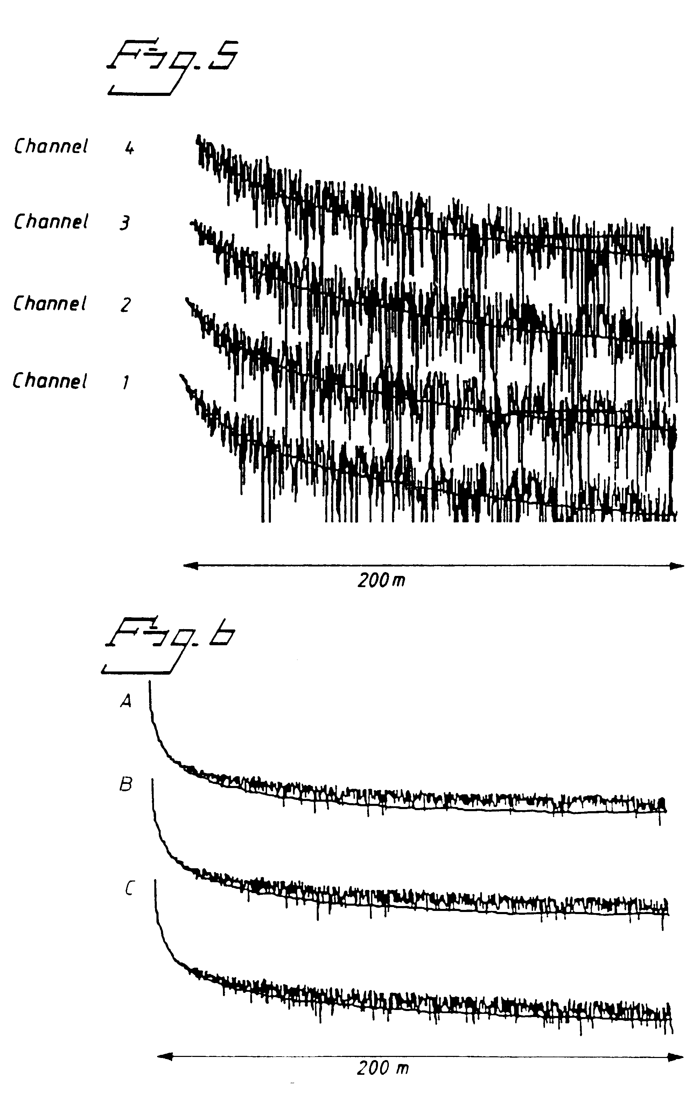

Figures 1, 3 and 5 show simulated propagation curves for, apart from the ideal two-beam case, also two types of more realistic wave propagation. Figures 2, 4 and 6 show the result of frequency diversity for the respective type of wave propagation when the signals are combined so that only the diversity channel is used which at the time has the maximum power, so-called switching diversity. Other methods of combining are also possible in accordance with the known diversity techniques.

**Claims**

1. Method for radiocommunication between a transmitter and a receiver which transmitter and receiver are mobile or fixed, wherein a nominal carrier wave frequency in the GHz range is used together with at least one diversity frequency, the receiver having the capability of combining signals in order to avoid fading minima in the overall propagation curve, **characterized** in that diversity channels are utilised which are selected according to the system of equations:

$$2 \cdot h_1 \cdot h_2/(1_n \cdot \lambda_o) = 2 \cdot h_1 \cdot h_2/(1_n \cdot \lambda_n) - 1/2$$

where $h_1$ and $h_2$ are the antenna heights at the respective transmitter/receiver system,
$1_n$ is the distance to respective minima in the propagation curve for the nominal frequency,
$\lambda_o$ is the nominal wavelength,
$\lambda_n$ is the wavelength of the respective diversity channel,
whereby n minima are bypassed.

2. Method according to Claim 1, **characterized** in that the carrier wave frequency is selected to be at least about 10 GHz, preferably around 60 GHz.

3. Method according to Claims 1 or 2, **characterized** in that the transmitted power is 1 mW - 1 W, preferably around 1 mW.

4. Method according to any of Claims 1-3, **characterized** in that the antenna heights are approx. 1.5 m.

## Patentansprüche

1. Verfahren zur Funkübertragung zwischen einem Sender und einem Empfänger, wobei Sender und Empfänger mobil oder stationär sein können, wobei eine Nominal-Trägerwellenfrequenz im GHz-Bereich zusammen mit wenigstens einer Diversity-Frequenz verwendet wird, wobei der Empfänger die Möglichkeit zum Kombinieren von Signalen hat, um Schwundminima in der Gesamtausbreitungskurve zu vermeiden,
dadurch **gekennzeichnet**, daß Diversity-Kanäle verwendet werden, die gemäß dem Gleichungssystem ausgewählt sind:

$$2 \times h_1 \times h_2/(1_n \times \lambda_0) = 2 \times h_1 \times h_2/(1_n \times \lambda_n) - 1/2$$

mit $h_1$ und $h_2$ gleich den Antennenhöhen an dem jeweiligen Sender/Empfänger-System,

$1_n$ gleich dem Abstand zu den jeweiligen Minima in der Ausbreitungskurve für die Nominalfrequenz,

$\lambda_0$ gleich der Nominalwellenlänge,

$\lambda_n$ gleich der Wellenlänge des entsprechenden Diversity-Kanals, wodurch n Minima nebengeschlossen sind.

2. Verfahren nach Anspruch 1,
dadurch **gekennzeichnet**, daß die Trägerwellenfrequenz so ausgewählt ist, daß sie wenigstens ungefähr bei 10 GHz vorzugsweise um 60 GHz liegt.

3. Verfahren nach Anspruch 1 oder 2,
dadurch **gekennzeichnet,** daß die Senderleistung 1 mW bis 1W vorzugsweise um 1mW beträgt.

4. Verfahren nach einem der Ansprüche 1 bis 3,
dadurch **gekennzeichnet**, daß die Antennenhöhen ungefähr 1,5 m betragen.

## Revendications

1. Procédé de radiocommunication entre un émetteur et un récepteur qui sont mobiles ou fixes, dans lequel une fréquence nominale d'une onde porteuse dans le domaine des GHz est utilisée avec au moins une fréquence de diversité, le récepteur ayant la capacité de combiner des signaux pour éviter des minima d'atténuation sur la totalité de la courbe de propagation, caractérisé en ce que des canaux de diversité sont utilisés et sont sélectionnés selon le système d'équations :

$$2 \cdot h_1 \cdot h_2/(1_n \cdot \lambda_o) = 2 \cdot h_1 \cdot h_2/(1_n \cdot \lambda_n) - 1/2$$

dans lesquelles :

$h_1$ et $h_2$ sont les hauteurs des antennes du système émetteur/récepteur respectif,
$1_n$ est la distance des minima respectifs dans la courbe de propagation pour la fréquence nominale,
$\lambda_o$ est la longueur d'onde nominale,
$\lambda_n$ est la longueur d'onde du canal de diversité respectif,

de sorte que les n minima sont évités.

2. Procédé selon la revendication 1, caractérisé en ce que la fréquence de l'onde porteuse est sélectionnée pour être égale à au moins 10 GHz et de préférence à environ 60 GHz.

3. Procédé selon la revendication 1 ou 2, caractérisé en ce que la puissance transmise est 1 mW - 1W, de préférence environ 1 mW.

4. Procédé selon l'une des revendications 1 à 3, caractérisé en ce que les hauteurs des antennes sont approximativement de 1,5 m.

Fig.1

Channel 4

Channel 3

Channel 2

Channel 1

200 m

Fig.2

A

B

C

200 m

## Fig.3

Channel 4

Channel 3

Channel 2

Channel 1

200 m

## Fig. 4

A

B

C

200 m

Fig.5

Channel 4

Channel 3

Channel 2

Channel 1

200 m

Fig.6

A

B

C

200 m